# EUROPEAN PATENT APPLICATION

(11) **EP 3 403 499 A1**
(43) Date of publication of application: **21.11.2018**
(21) Application number: 18173157.1
(22) Date of filing: 18.05.2018
(51) Int. Cl.: A01M 23/30

(54) **RODENT STATION**

(30) Priority: 19.05.2017 GB 201708087
(71) Applicant: Pelsis Limited, Grimbald Crag Close Knaresborough North Yorkshire HG5 8PJ (GB)
(72) Inventor: ARDRON, Richard, Knaresborough, North Yorkshire (GB); FISH, John, Knaresborough, North Yorkshire HG5 8PJ (GB)
(74) Representative: Appleyard Lees IP LLP

(57) **Abstract**

A housing for a rodent station, the housing comprising a catching region having a plurality of catching zones, each catching zone being adapted to releasably hold a rodent trap device.

## Description

The present invention relates to rodent stations, and in particular rodent stations adapted to trap a plurality of rodents.

Rodent stations are used to catch and eliminate rodents. Different types of rodent stations include mechanical traps, bait boxes or glue traps. Mechanical traps typically use a spring mechanism which, when triggered, quickly kills a rodent. Other mechanical rodent stations may involve closing an entrance to the trap in order to trap the rodent without eliminating the rodent. Bait boxes may involve setting bait which will poison the rodent when consumed.

Glue rodent stations catch the rodent such that it cannot escape the trap and eventually dies.

A trap mechanism may be built into the housing of the trap or may be removably inserted into the trap. The traps may be single-use traps, or may be adapted to allow a user to remove the rodent and to reset the trap.

In conventional rodent stations, only one rodent may be caught in the rodent station at one time. A disadvantage arises from the use of conventional rodent stations in that the traps need to be regularly reset or replaced or several rodent stations may be required to be set to meet requirements in catching rodents.

According to an aspect of the invention, there is provided a rodent station housing having a plurality of catching zones, each catching zone being adapted to releasably hold a rodent trap device.

A housing having a plurality of catching zones is advantageous because it provides the opportunity to increase the number of rodents that may be caught in the trap. The user may be required to replace or reset the trap devices less frequently. Furthermore, the user may be required to place fewer traps to meet the requirements for catching rodents in an area.

An advantage of providing a trap device in a housing is that it may reduce the likelihood of non-target species, for example cats or dogs, from being caught in the trap device.

The housing may comprise a retaining means for releasably retaining a trap device in a fixed position in the housing. Each catching zone may comprise a retaining means for releasably retaining the trap device in a desired location. The retaining means may allow a trap device to be removed from the housing, providing the advantage that a user may reset the trap device and return the reset trap device to the housing. Alternatively, if the trap devices are single-use trap devices, the user may replace a triggered trap device with a replacement trap device.

The housing may comprise a base and/or a lid and/or and walls. The housing may be a box. An opening may be provided in a wall of the housing, through which rodents may enter the interior of the housing. More than one opening may be provided in the walls of the housing.

For example, the housing may comprise two openings for rodents to enter the housing.

The housing may comprise an entry region and a catching region in the interior of the housing. If the housing comprises more than one opening, the housing may comprise more than one entry region. The catching region may comprise the plurality of catching zones. The catching zones may be arranged such that a rodent may move from one catching zone to another catching zone. A first catching zone may be provided adjacent the entry region. In use, a rodent may move through the entry region into the first catching zone and may be trapped in the first catching zone. If a trap device in a first catching zone has already been triggered, a rodent may move through the first catching zone into a second catching zone to trigger a trap device in a second catching zone.

The catching region may comprise four catching zones and so the rodent housing may be adapted to hold four rodent trap devices. In use, the housing may retain four trap devices. However, in use the housing may retain only one or two or three trap devices.

The rodent trap devices may be snap trap devices. The base area of each catching zone may be the same shape and size as the base area of a snap trap device. The base area of each catching zone may be rectangular.

The housing may comprise one or more separators. The one or more separators may separate the catching region into the separate catching zones. The one or more separators may define the shape of the catching zones. The one or more separators may provide a visual indicator for the user to assist the user in placing the trap devices in the desired location in use.

At least one of the separators may function as the retaining means for releasably retaining the trap devices in the desired location. The side walls may function as the retaining means for releasably retaining the trap devices in the desired location.

In use, a trap device may be placed in a catching zone such that a separator is adjacent one side of the housing, and a side wall is adjacent another side of the housing. The side wall and separator may prevent the trap device from moving around in the catching region.

At least one of the separators may define a path from a first catching zone to a second catching zone. At least one of the separators may define a path from a third catching zone to a fourth catching zone. The separators may be for directing a rodent into a desired position in a catching zone.

The one or more separators may be upstanding from the base of the housing. At least one of the separators may be an interior wall. The interior wall may extend to approximately the same height as the side walls.

The lid may be removable from the housing. The lid may be pivotably attachable to a wall of the housing, such that the lid may be pivoted between open and closed positions in use. This is advantageous because it allows a user to access the interior of the housing. A user may open the lid to check if any trap devices have been triggered, and to remove and/or replace any triggered trap devices.

In use, a method of deploying a plurality of rodent trap devices may comprise setting a plurality of the rodent station housings in an area, preferably with only one or two trap devices in each housing. The method may further comprise determining in which of the housings a rodent is caught first. The method may further comprise retaining a further one or two trap devices in the determined housing or housings.

For a better understanding of the invention, and to show how embodiments of the same may be carried into effect, reference will now be made, by way of example, to the accompanying diagrammatic drawings, in which:
Figure 1 is a perspective view of a rodent station housing; and
Figure 2 is a top plan view of the rodent station housing of figure 1, with the lid removed.

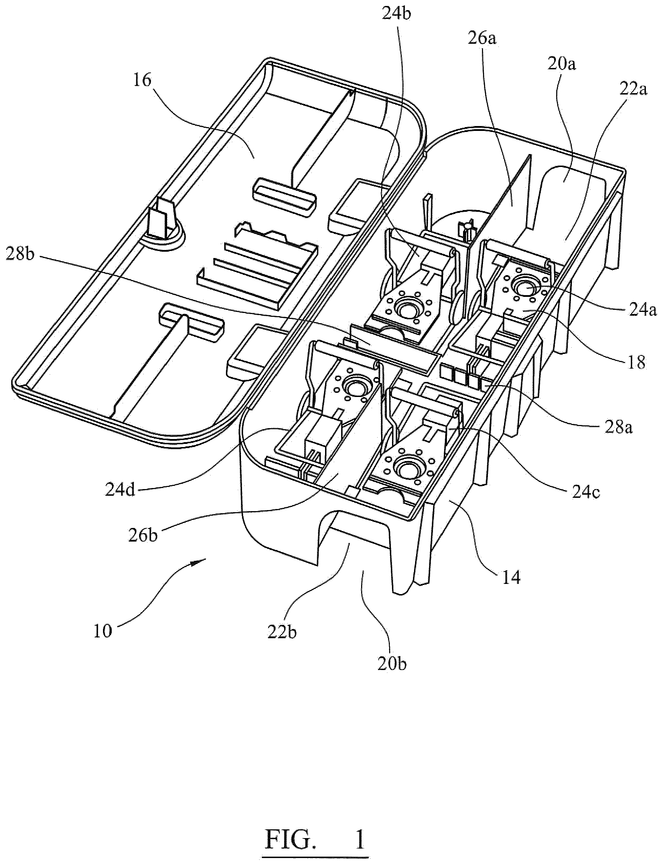

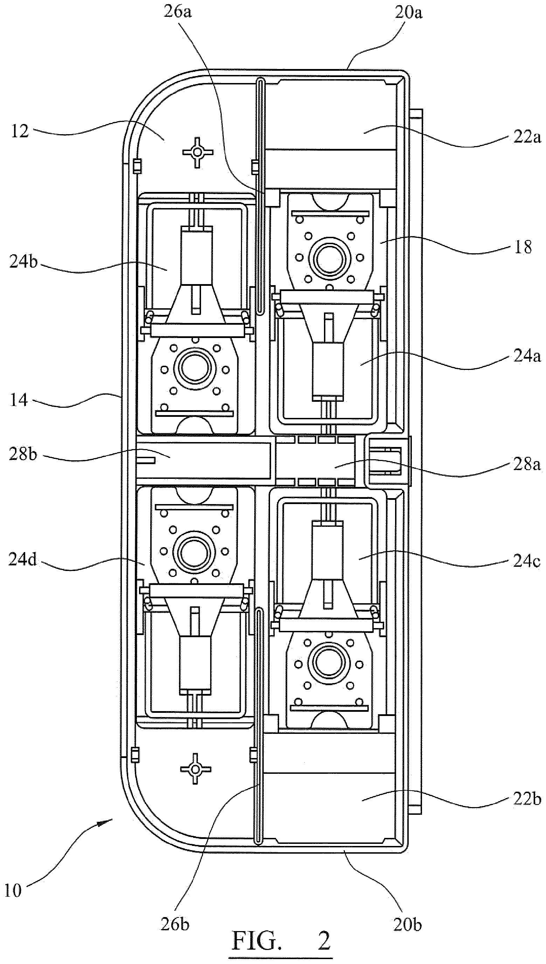

Figures 1 and 2 show a rodent trap comprising a housing 10 having a base 12, side walls 14, and a lid 16. As shown in figures 1 and 2, the housing 10 is adapted to hold four conventional rodent snap trap devices 18. A conventional rodent snap trap device comprises a rectangular base, a trigger plate arranged at one end of the base, and a spring-loaded trapping bar.

The lid 16 is removable to provide access to the interior of the housing 10. As shown in figure 1, one side of the lid 16 is pivotably attachable to a side wall 14 of the housing 10, such that the lid 16 may be pivoted between open and closed positions. A user may pivot the lid 16 to an open position to insert trap devices 18 into the housing 10. When the trap devices 18 are set and in the desired locations, the lid 16 may be pivoted to a closed position by a user.

The housing 10 comprises two openings 20a, 20b provided in the side walls 14, for allowing rodents to enter the housing 10. The base 12 of the housing 10 is substantially rectangular, and the two openings are provided on opposing side walls 14 of the housing 10.

The interior of the housing 10 comprises two entry regions 22 and a catching region. Each entry region 22 is adjacent an opening 20a, 20b. The catching region comprises four catching zones 24a-d. Each catching zone 24a-d is adapted to hold one snap trap device 18.

The housing 10 comprises separators 26, 28 for separating the catching region into the four catching zones 24. The base 12 is substantially flat and the separators 26, 28 are upstanding from the base 12.

The separators 26, 28 are arranged such that each catching zone 24a-d may securely hold a snap trap device 18, and the separators 26, 28 inhibit the trap device 18 from moving within catching region into a different catching zone 24. The separators 26, 28 allow a user to easily place each snap trap device 18 in the desired location in the housing 10.

The separators 26, 28 are made up of two dividers 26 and two partitions 28. The height to which the dividers 26 extend from the base 12 of the housing 10 is greater than the height to which the partitions 28 extend from the base 12 of the housing 10. The dividers 26 extend from the base 12 towards the lid 16 of the housing 10; the height of the dividers 28 is approximately the height of the side walls 14. The partitions 28 extend less than half-way up the height of the housing 10 from the base 12.

The dividers 26 define a path for a rodent into the different catching zones 24a-d. The dividers 26 act to direct a rodent towards the trigger plate end of a snap trap device 18 in different catching zones 24a-d and to prevent the rodent from accessing the catching zones 24a-d at the other end of the snap trap device 18. A first divider 26a defines a path from the first opening 20a, through the entry region 22a, through the first catching zone 24a and into the second catching zone 24b. Similarly, a second divider 26b defines a path for a rodent from the second opening 20b, through the second entry region 22b, through the third catching zone 24c and into the fourth catching zone 24d.

If the trap device 18 in the first catching zone 24a is not triggered, the rodent entering the first catching zone 24a from the first entry region 22a will be trapped in that trap device 18. If the trap device 18 in the first catching zone 24a has been triggered, a rodent may enter the second catching zone 24b from the first catching zone 24a, and may be trapped in the trap device 18 in the second catching zone 24b.

The base area of each catching zone 24a-d is substantially rectangular. The first divider 26a extends from a side wall 14 adjacent the first opening 20a, along the edge of the first entry region 22a, and separates the first catching zone 24a from the second catching zone 24b.

The first divider 26a does not extend along the full length of the first and second catching zones 24a, 24b; there is a space between the end of the first divider 26a and the partitions 28 at the end of the first and second catching zones 24a, 24b, through which a rodent can travel from the first catching zone 24a to the second catching zone 24b.

Similarly, the second divider 26b extends from a side wall 14 adjacent the second opening 20a, along the edge of the second entry region 22b. The second divider 26b separates the third catching zone 24c from the fourth catching zone 24d and a space is provided between the end of the second divider 26b and the partitions 28 at the end of the third and fourth catching zones 24c, 24d through which a rodent may travel from the third catching zone 24c to the fourth catching zone 24d.

The first partition 28a is provided between the first catching zone 24a and the third catching zone 24c. The second partition 28b is provided between the second catching zone 24b and the fourth catching zone 24d.

In use, a first trap device 18a may be arranged in the first catching zone 24a with the trigger plate facing the first opening 20a, a second trap device 18b may be arranged in the second catching zone 24b on the other side of the divider 26a to the first trap device 18a. The trigger plate of the second trap device 18b may be provided adjacent the entry point from the first catching zone 24a to the second catching zone 24b. A third trap device 18c may be provided in the third catching zone 24c, with the trigger plate facing the second opening 20b and a fourth trap device 18d may be provided in the fourth catching zone 24d on the other side of the second divider 26b to the third trap device 18c.

The housing 10 is adapted to hold four snap trap devices 18, however, a user may choose to place only one, two or three snap trap devices 18 in the housing 10, leaving the remaining catching zones empty of a trap device 18.

The rodent station housing 10 provides the advantage that a plurality of trap devices 18 may be retained in the housing 10, thereby increasing the number of rodents that may be caught in the trap. The user may therefore be required to reset the trap devices 18 in the housing 10 less frequently and/or may be required to place fewer traps in an area.

Attention is directed to all papers and documents which are filed concurrently with or previous to this specification in connection with this application and which are open to public inspection with this specification, and the contents of all such papers and documents are incorporated herein by reference.

All of the features disclosed in this specification (including any accompanying claims, abstract and drawings), and/or all of the steps of any method or process so disclosed, may be combined in any combination, except combinations where at least some of such features and/or steps are mutually exclusive.

Each feature disclosed in this specification (including any accompanying claims, abstract and drawings) may be replaced by alternative features serving the same, equivalent or similar purpose, unless expressly stated otherwise. Thus, unless expressly stated otherwise, each feature disclosed is one example only of a generic series of equivalent or similar features.

The invention is not restricted to the details of the foregoing embodiment(s). The invention extends to any novel one, or any novel combination, of the features disclosed in this specification (including any accompanying claims, abstract and drawings), or to any novel one, or any novel combination, of the steps of any method or process so disclosed.

## Claims

1. A housing for a rodent station, the housing comprising a catching region having a plurality of catching zones, each catching zone being adapted to releasably hold a rodent trap device.

2. A housing according to claim 1, wherein the catching region comprises four catching zones.

3. A housing according to claim 1 or claim 2, wherein the housing comprises retaining means for releasably retaining a trap device in a fixed position in the housing.

4. A housing according to any preceding claim, wherein the housing comprises one or more separators for separating the catching region into the plurality of catching zones.

5. A housing according to claim 4, wherein at least one of the separators defines a path between two catching zones.

6. A housing according to claim 4 or claim 5, wherein the one or more separators are upstanding from the base of the housing.

7. A housing according to claims 6, wherein at least one of the separators is an interior wall.

8. A housing according to any preceding claim, wherein the housing comprises a lid that is pivotably attachable to a wall of the housing and the lid may be pivoted between open and open position and a closed position.

9. A method of deploying a plurality of rodent trap devices, comprising setting a plurality of the housings according to any preceding claim within an area.

10. A rodent station comprising a housing and a plurality of trap devices, wherein the housing comprises a plurality of catching zones and each catching zone releasably retains a trap device.
